Europäisches Patentamt

European Patent Office

Office européen des brevets

(11) Publication number: **0 292 053**
**A1**

## EUROPEAN PATENT APPLICATION

(21) Application number: **88200939.2**

(22) Date of filing: **11.05.88**

(51) Int. Cl.⁴: **G07C 13/00 , G09B 21/00**

(30) Priority: **15.05.87 NL 8701167**

(43) Date of publication of application:
**23.11.88 Bulletin 88/47**

(84) Designated Contracting States:
**BE DE GB NL SE**

(71) Applicant: **N.V. Nederlandsche Apparatenfabriek NEDAP Oude Winterswijkseweg 7 NL-7141 DE Groenlo(NL)**

(72) Inventor: **de Jong, Hendrik Johannes Mesdagstraat 1 NL-7141 XJ Groenlo(NL)**

(74) Representative: **Smulders, Theodorus A.H.J. et al Vereenigde Octrooibureaux Nieuwe Parklaan 107 NL-2587 BP 's-Gravenhage(NL)**

(54) **Electronic voting machine.**

(57) An electronic voting machine comprising a tableau having means for visually displaying lists of candidates of parties participating in an election; means for inputting a choice made into the machine and confirming the same, which means include at least one "vote" key; and means for cancelling an erroneous choice; whereby auditory aids are arranged for guiding and instructing the user in operation, during the voting procedure to be followed by means of a talking manual.

## An electronic voting machine.

This invention concerns an electronic voting machine comprising a tableau having means for visually displaying lists of candidates of parties participating in an election; means for inputting a choice made into the machine and confirming the same, said means including at least one "vote" key; and means for cancelling an erroneous choice.

The use of voting machines is increasingly finding acceptance in various countries. In many cases, a machine of this kind consists of a tableau to which, so to speak, the voting paper, in enlarged design, is affixed. Instead of colouring a spot before the candidate and putting the voting paper into the ballot box, as in the past, a button at the desired candidate has to be pressed now. The choice is then made. Subsequently, the "voting" key is pressed, which renders the choice definite: the vote has then been cast. Machines of this type have increasingly been designed electronically recently, allowing in a simple manner to indicate on a visual display what operations have to be carried out at each step of the election process, what choice has been made, and whether an error in operation has been made (so-called guided, programmed instruction). Also, the adjustment of the machine to the voting lists and parties varying per each election (the so-called programming of the machine) is easier electronically than with the earlier mechanical voting machines. But even these modern voting machines having the inherent drawback, as is also the case with the voting-paper method for that matter, that people with impaired vision and blind persons cannot use it, for one thing because they are unable to read the texts. Consequently, with the present-day voting machine, too, the group of visually handicapped persons can only vote with the aid of third parties. As a result, there is not much privacy for this group of handicapped persons during voting. It is an object of the present invention to construct an electronic voting machine which can be operated also by people having poor vision and blind persons in a simple manner. To that end, the voting machine is provided with auditory aids indicating by means of spoken words what operations are to be carried out successively whether errors are being made and which party and candidate have been chosen.

The voter, in that case, can listen in to certain instructions and texts. The listening-in should be done before the commencement of the voting procedure. The instructions may differ according to the election system of the country in question, but at any rate consist of the instructions for the voting procedure, reading out the names of all voting lists and pertinent numbers and reading out the names of all candidates and pertinent numbers.

An alternative embodiment is the use of a so-called speech chip. By means of this auditory means, the operator, before a necessary step in the various options is taken, can have at his disposal guiding or instructing text. Naturally, this should not be heard by other persons present in the polling station. To that end, use can be made e.g. of a good sound insulation or of a headphone to be worn by the voter. As before, the voter continues to operate the voting machine manually, e.g. by pressing keys or by touching the display in the case of a so-called touch screen. With a view to also allowing a person of impaired vision or a blind person to do this by touch with facility, the voting machine should be provided especially for this purpose with ergonomically correct tactile means. This could be done e.g. by using guideways for the fingers and other palpable marks, e.g. at the name of a party or candidate and at the "vote" key.

The voting machine can be operated by virtue of the numbers for the lists differing palpably from each other by means of relief, such as braille. Besides, the voting key is provided at least at its front with an upright edge, so that this key cannot be pressed inadvertently.

The lists of candidates are shown by means of Liquid Crystal Displays. These LCDs are recessed, so that the voter can feel the place of the juxtaposed columns with candidates.

The programming of the voting machine having auditory aids for an election can take place in various manners known in electronics.

One manner is e.g. to read text, parties and names of candidates into each machine, using a semiconductor, magnetic or optical memory provided within or outside the machine. It is also possible to effect central recordings and multiplications for these memory media, e.g. per municipality, and subsequently have these installed in the various voting machines.

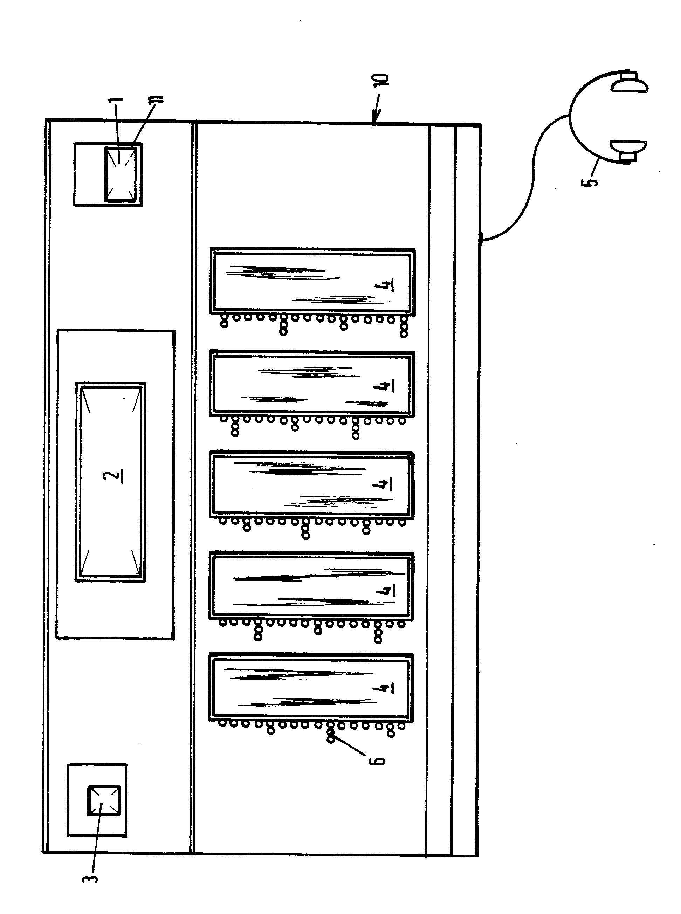

Also possible is a programming via a telephone and/or data link, etc. This is elucidated in the figure.

The figure shows an embodiment of an electronic voting machine 10 with special aids. A "vote" key 1 is protected against inadvertent pressing by an upright edge 11. The graphic instruction display 2 is used for displaying guided instructions and choices made. As a visual display may be used e.g. an LCD screen, an LED array, a monitor and the like. A rectifying key 3 serves for rectifying an erroneous choice. A plurality of graphic displays 4 with touch screens are used for reading and inputting available options. The headphone 5 serves for reproducing auditory instructions or choices that should not be heard in the polling station. The headphone can be connected in such a manner that it is actuated only after switching a special switch, not shown, but may also be permanently in operation.

Next to each graphic display, there is arranged a palpable row of dots in relief 6. Each of the dots corresponds with the number of the list or the number of the candidate of the list concerned.

It is observed that, after studying the above, various modifications will readily occur to one skilled in the art. For instance, the indications for the name of each candidate and, possibly, each list may be provided on a push button, which is then operative as a preselector button. The preselection can then be confirmed by operating the "vote" key 1. The displays 4 need not be designed as touch screens then. When a preselector button (if any) and/or a display is marked visually after a preselection has been made, e.g. is illuminated, the function of the instruction display can be restricted accordingly, if desired.

Such and similar modifications are deemed to fall within the scope of the present invention.

## Claims

1. An electronic voting machine comprising a tableau having means for visually displaying lists of candidates of parties participating in an election; means for inputting a choice made into the machine and confirming the same, said means including at least one "vote" key; and means for cancelling an erroneous choice, characterized by auditory aids arranged for guiding and instructing the user, in operation, during the voting procedure to be followed by means of a talking manual.

2. An electronic voting machine as claimed in claim 1, characterized in that the auditory aids comprise a prerecorded audiotape.

3. An electronic voting machine as claimed in claim 1, characterized in that the auditory aids comprise a voice chip.

4. An electronic voting machine as claimed in any of the preceding claims, characterized in that the auditory aids comprise a headphone.

5. An electronic voting machine as claimed in any of the preceding claims, characterized in that the auditory aids are controllable at least partly by the means for indicating or confirming a choice made.

6. An electronic voting machine as claimed in any of the preceding claims, characterized by visual aids adapted for displaying at least a choice inputted into the machine.

7. An electronic voting machine as claimed in claim 6, characterized in that the visual aids comprise a visual display, such as an LCD screen or a LED array.

8. An electronic voting machine as claimed in claim 6 or 7, characterized in that the visual aids comprise selector keys provided for each candidate of a list of candidates displayed, each selector key having a light source activated by operation of the selector key concerned.

9. An electronic voting machine as claimed in any one of claims 6,7 and 8, characterized in that the lists of candidates are formed by programmable visual displays.

10. An electronic voting machine as claimed in claim 9, characterized in that the visual displays for the lists of candidates are designed as a touch screen.

11. An electronic voting machine as claimed in any of the preceding claims, characterized in that the tableau is provided with tactile aids, enabling operation of the voting machine by touch.

12. An electronic voting machine as claimed in claim 11, characterized in that the tactile aids comprise relief characters, corresponding with each candidate of the lists of candidates.

13. An electronic voting machine as claimed in claim 12, characterized in that the relief characters are braille characters.

14. An electronic voting machine as claimed in any one of claims 11-13, characterized in that the lists of candidates are disposed on a level differing palpably from the level of the tableau.

15. An electronic voting machine as claimed in claim 14, characterized in that the lists of candidates are recessed relatively to the tableau.

16. An electronic voting machine as claimed in any one of claims 13-15, characterized in that the braille characters are disposed on the top of selector keys.

17. An electronic voting machine as claimed in any of the preceding claims, characterized in that at least near the "vote" key there is provided a raised edge, which protects the "vote" key against unintentional operation.

0 292 053

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 649 264 (CARSON) <br> * Abstract; column 1, line 43 - column 2, line 66; column 15, line 7 - column 16, line 41; column 27, line 18 - column 28, line 59; figures * | 1-4 | G 07 C 13/00 <br> G 09 B 21/00 |
| A | | 6-8 | |
| Y | IEEE MICRO, vol. 3, no. 3, June 1983, pages 8-16, IEEE, New York, US; C.P. GROSSNER et al.: "An integrated workstation for the visually handicapped" <br> * Page 8, column 2, lines 1-19; page 10, column 1, line 3 - page 11, column 1, line 7; page 15, column 1, line 58 - page 16, column 1, line 13; figures * | 1,2,4 | |
| A | IDEM | 11-13, 16 | |
| Y | SPEECH TECHNOLOGY, vol. 2, no. 2, January/February 1984, pages 88-96, New York, US; K.S. FERTNER: "Synthesized speech aids in teaching technical military terms" <br> * Page 89, column 1, line 31 - page 89, column 2, line 25; page 90, column 2, line 2 - page 91, column 3, line 12; figures * | 3 | TECHNICAL FIELDS SEARCHED (Int. Cl.4) <br><br> G 07 C <br> G 09 B <br> G 06 F <br> G 10 L |
| A | | 1,5-7, 11 | |
| A | US-A-3 779 453 (KIRBY et al.) <br> * Abstract; column 5, line 48 - column 6, line 57; figures * <br> ---       -/- | 1,6,8-10 | |

The present search report has been drawn up for all claims

| Place of search | Date of completion of the search | Examiner |
|---|---|---|
| THE HAGUE | 01-09-1988 | MEYL D. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | EP-A-0 061 595 (NIXDORF) * Abstract; figures * | 1,11-13 | |
| A | ELEKTRONIK, vol. 32, no. 1, January 1983, pages 69-72, Munich, DE; G. GEISER et al.: "Sprechende Funktionstastatur führ den Benutzer" | | |
| A | MICROPROCESSORS AND MICROSYSTEMS, vol. 8, no. 10, December 1984, pages 516-519, Butterworth & Co., (Publishers) Ltd, Guildford, Surrey, UK; J.M. GILL: "Aids for the visually handicapped" | | |
| A | IBM TECHNICAL DISCLOSURE BULLETIN, vol. 19, no. 2, July 1976, pages 674-675, New York, US; N.C. LOEBER: "Dictation transcribing arrangement for blind stenographers" | | |

TECHNICAL FIELDS
SEARCHED (Int. Cl.4)

The present search report has been drawn up for all claims

| Place of search | Date of completion of the search | Examiner |
|---|---|---|
| THE HAGUE | 01-09-1988 | MEYL D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)